Europäisches Patentamt

European Patent Office

Office européen des brevets

(19)

(11) Veröffentlichungsnummer: **0 107 826**
**B1**

(12) **EUROPÄISCHE PATENTSCHRIFT**

(45) Veröffentlichungstag der Patentschrift:
**20.04.88**

(51) Int. Cl.⁴: **B 23 F 19/10**

(21) Anmeldenummer: **83110072.2**

(22) Anmeldetag: **08.10.83**

(54) Werkzeugmaschine zum gleichzeitigen Fräsen mehrerer Flächen vom freien Ende eines Werkstücks her.

(30) Priorität: **29.10.82 DE 3240165**

(43) Veröffentlichungstag der Anmeldung:
**09.05.84 Patentblatt 84/19**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**CH - A - 498 679**
**DE - A - 1 627 378**
**DE - A - 3 000 295**
**DE - B - 1 048 762**
**FR - A - 1 280 289**
**FR - A - 2 347 138**
**US - A - 2 184 232**
**US - A - 3 766 688**

(73) Patentinhaber: **Wera-Werk Hermann Werner GmbH & Co., Korzerter Strasse 21, D-5600 Wuppertal 12 (DE)**

(72) Erfinder: **Lieser, Karl, Dornröschenweg 12, D-5600 Wuppertal 1 (DE)**

(74) Vertreter: **Rieder, Hans-Joachim, Dr., Corneliusstrasse 45 Postfach 11 04 51, D-5600 Wuppertal 11 (DE)**

ACTORUM AG

## Beschreibung

Die Erfindung betrifft eine Werkzeugmaschine gemäss Gattungsbegriff des Patentanspruches.

Eine derartige Maschine ist bekannt aus der DE-A-1 627 378, wobei ein Frässpindelkopf mit einer Bogenführung zur Aufnahme zweier Fräser-Drehachsenträger ausgestattet ist. Ferner nimmt der Frässpindelkopf eine horizontale Frässpindel auf, welche rechtwinklig zu den Spindeln der Fräser-Drehachsenträger verläuft. Sollen an zahnradartigen Werkstücken Abdachungen an den Stirnflächen der Zähne erzeugt werden, so ist der Frässpindel ein Fingerfräser zuzuordnen, der in das entsprechend angetriebene Werkstück eintaucht. Die Träger werden verwendet, wenn nach dem Stossfräs-Verfahren gearbeitet werden soll. Sie werden dann mit stirnseitig arbeitenden Fingerfräsern bestückt. Durch Kurvensteuerung taucht das Werkstück, ohne sich zu drehen, in diese Fingerfräser ein. Dann erlaubt es diese Werkzeugmaschine, die Frässpindel mit einem Schlagmesser zu bestücken. Nach Einschalten eines Antriebsmotors drehen sich Werkstück und Frässpindel synchron, und das Schlagmesser überstreicht fortlaufend zwei benachbarte Zahnenden auf einer zykloidischen Flugbahn. Auch hier bedient man sich einer Kurvensteuerung zur vertikalen oder horizontalen Zustellung des Werkstückes zum Schlagmesser. Eine weitere Möglichkeit dieser Werkzeugmaschine besteht darin, nach einem Wälzfräs-Verfahren zu arbeiten. Hierzu wird beispielsweise eine Frässpindel mit einem Wälzfräser ausgestattet. Die Bearbeitung kann nun im Tauch- oder Längsverfahren erfolgen. Dieses Wälzfräs-Verfahren gestattet dabei unter Verwendung von Entgrate-Wälzfräsern eine Anfasung der Zahnkanten. Mittels dieser Maschine können jedoch unter Verwendung der Schlagmesserbearbeitung nicht wirtschaftlich gratfreie Abdachungen an den Zahnstirnflächen von zahnradartigen Werkstücken erzeugt werden.

Das Fertigen von entsprechenden Abdachungen an zahnradartigen Werkstücken ist allerdings bekannt aus der DE-B-1 048 762. Dort sind aber die Träger getrennt voneinander um eigene Schwenkachsen gelagert. Ferner bearbeiten die Schlagmesser die Zahnenden derart, dass die Gratbildung zum Zahninneren hin erfolgt, aus welchem ein dort entstehender Grat relativ schwer zu entfernen ist. Dieses macht eine aufwendige Nachbehandlung der mit Abdachungen versehenen Zahnräder erforderlich.

Dem Gegenstand der Erfindung liegt die Aufgabe zugrunde, eine Werkzeugmaschine der vorausgesetzten Art in herstellungstechnisch einfacher Weise so auszugestalten, dass durch Schlagmesserbearbeitung an zahnradartigen Werkstücken gratfreie Abdachungen erzeugbar sind.

Gelöst wird diese Aufgabe dadurch, dass die zusätzlich in Längsrichtung der Fräser-Drehachsen zentral auf die Träger-Schwenkachse zustellbaren Fräser als Einzahn-Schlagmesser ausgebildet und in Synchronlauf zueinander angetrieben sind derart, dass die einander zugekehrten Drehrichtungen in Richtung der Stirnseite des Werkstückes und so liegen, dass das eine Schlagmesser die auf der einen Seite des Zahnes liegende Dachfläche und gleichzeitig das andere Schlagmesser die entgegengesetz stehende Dachfläche eines anderen Zahnes fräst.

Zufolge derartiger Ausgestaltung ist eine Werkzeugmaschine angegeben, mittels welcher neben den unterschiedlichsten Nuten bzw. Flächen an Werkstücken auch an zahnradartigen Werkstükken Abdachungen an den Stirnflächen der Zähne erzeugt werden können. Jedes Schlagmesser arbeitet dabei aus der Zahnung in Richtung des Firstes der Abdachung heraus, so dass an den Zahnrandkanten ein Entstehen eines Grates mit Sicherheit verhindert ist. Es entsteht praktisch auch kein Grat an dem Dachfirst selbst. Entsprechende aufwendige Nachbehandlungen der Zahnräder entfallen dadurch. Es können sowohl aussen- als auch innenverzahnte Werkstücke auf diese Weise behandelt werden. Die Träger sind hierzu in eine solche Winkelstellung zu bringen, dass das eine Schlagmesser die in Drehrichtung des Werkstückes liegende Dachschräge und das andere Schlagmesser die in entgegengesetzter Laufrichtung des Werkstückes liegende Dachschräge erzeugt. Dies lässt sich auch mit einer grossen Genauigkeit erreichen. Unterstützt wird diese Massnahme dadurch, dass die Fräser-Drehachsen zentral auf die Träger-Schwenkachse zustellbar sind. Die Werkzeugschneiden stören sich durch entsprechende Winkeleinstellungen der Träger nicht gegenseitig.

Schliesslich besteht ein günstiges Merkmal noch darin, dass die Drehrichtung der Fräser umkehrbar ist. Dies eröffnet die Möglichkeit, die Gratbildung zu bestimmen, und zwar stets so, dass aus der Zahnung herausgearbeitet wird. Der Grat kann dann von aussen her auf einfache Weise z.B. durch Abstreifen entfernt werden, falls er vorher noch nicht abgefallen ist.

Nachstehend wird ein Ausführungsbeispiel der Werkzeugmaschine anhand der Fig. 1–10 erläutert. Es zeigt

Fig. 1 eine Ansicht der Werkzeugmaschine im Arbeitsbereich von Werkstück und Fräsern,

Fig. 2 eine Draufsicht auf Fig. 1,

Fig. 3 einen teilweisen Längsschnitt durch den Träger unter Veranschaulichung der axialen Zustellbarkeit der Fräser-Drehachse,

Fig. 4 eine Stirnansicht des Fräsers,

Fig. 5 eine Stirnansicht gegen ein mit einer Aussenverzahnung versehenes Werkstück unter Veranschaulichung der Umlaufebenen der als Einzahn-Schlagmesser ausgebildeten Fräser,

Fig. 6 eine klappfigürliche Ansicht der Fig. 5 mit dargestellten Einzahn-Schlagmessern,

Fig. 7 eine Stirnansicht eines innenverzahnten Werkstücks,

Fig. 8 teils in Ansicht, teils im Schnitt das innenverzahnte Werkstück,

Fig. 9 ein aussenverzahntes Werkstück, wobei die Einzahn-Schlagmesser diametral am Werkstück angreifen und

Fig. 10 in perspektivischer Ausschnittsdarstellung einen Zahn eines Werkstücks mit sphärischen Abdachungen.

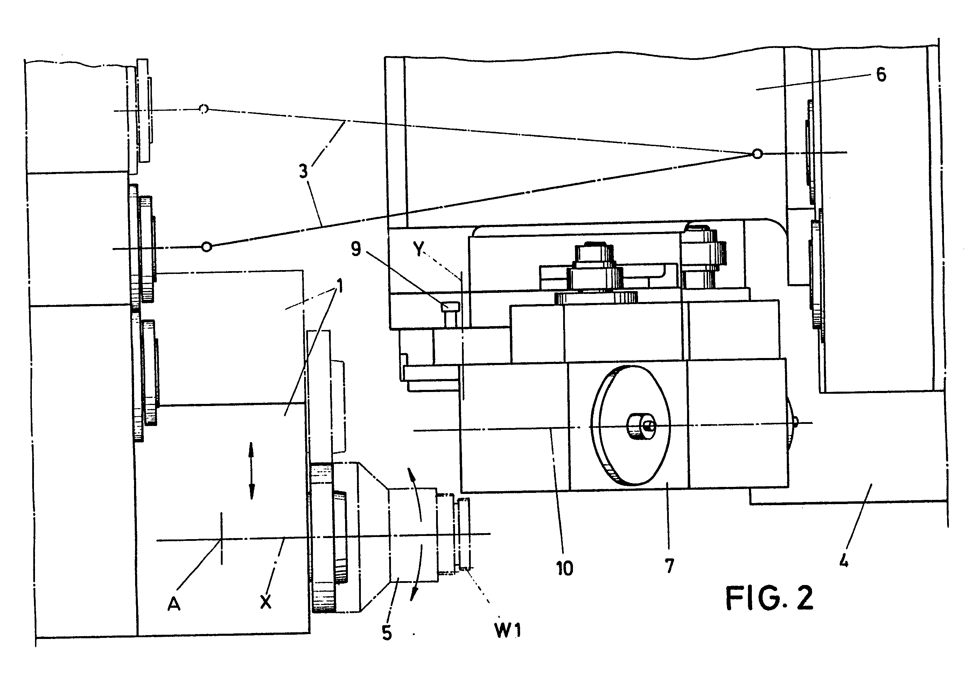

Die Maschine besitzt einen Werkstück-Träger 1, der mittels eines schienengeführten Schlittens 2 quer zur Werkstück-Drehachse X verlagerbar ist. Ferner ist eine Bewegung des Werkstück-Trägers 1 in Richtung der Werkstück-Drehachse X möglich. Zu diesem Zweck greift eine Gelenkwelle 3 an dem Werkstück-Träger 1 an, die ihrerseits von einem ortsfesten maschinenseitigen Lagerbock 4 ausgeht. Bei einer Querverlagerung des Werkstück-Trägers 1 gelangt die Gelenkwelle 3 in eine andere Winkelstellung, vergl. strichpunktierte Darstellung in Fig. 2. Zusätzlich ist die Drehachse X des Werkstück-Trägers um eine vertikale Achse A schwenkbar, und zwar in den in Fig. 2 angedeuteten Pfeilrichtungen.

Der Werkstück-Träger 1 weist ein Spannfutter 5 auf, mittels welchem sowohl aussen- als auch innenverzahnte Werkstücke W1 und W2 eingespannt werden können.

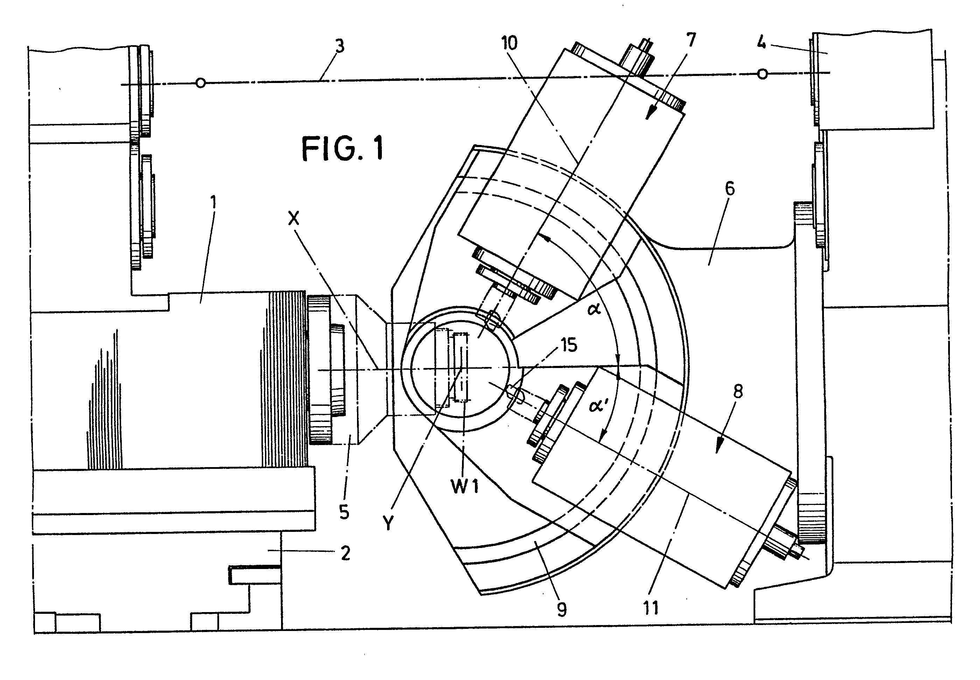

Der Lagerbock 4 ist Tragelement eines in Richtung des Werkstück-Trägers 1 weisenden Auslegers 6. Letzterer enthält eine senkrecht zur Werkstück-Drehachse X liegende Achse Y. Um diese sind zwei unabhängig voneinander schwenkbare Träger 7 und 8 angeordnet, die in vorgegebenen Winkelstellungen verspannbar sind. Zu diesem Zweck dient eine konzentrisch zur Schwenkachse Y verlaufende Nut 9, in die nicht dargestellte Spannschrauben der Träger 7, 8 eingreifen. Die Träger 7, 8 nehmen die Fräser-Drehachsen 10 bzw. 11 auf derart, dass die Fräser-Drehachsen zentral zur Fräser-Schwenkachse Y liegen. Der Ausleger 6 und die Träger 7, 8 sind so bemessen, dass die Fräser-Drehachsen 10, 11 in einem Bereich von 30–60° verstellt werden können. In Fig. 1 ist dargestellt, dass der obere Träger 7 bzw. dessen Fräser-Drehachse 10 im Winkel $\alpha$ von 60° und die Fräser-Drehachse 11 des anderen Trägers 8 im Winkel $\alpha'$ von 30° zu der durch die Drehachse X gelegten horizontalen Ebene angeordnet ist.

Über ein nicht dargestelltes, im Lagerbock 4 untergebrachtes Getriebe und eine sich daran anschliessende Getriebekette werden die Fräser-Drehachsen 10, 11 angetrieben, und zwar vorzugsweise so, dass die Drehrichtungen z und $Z_1$ umkehrbar sind.

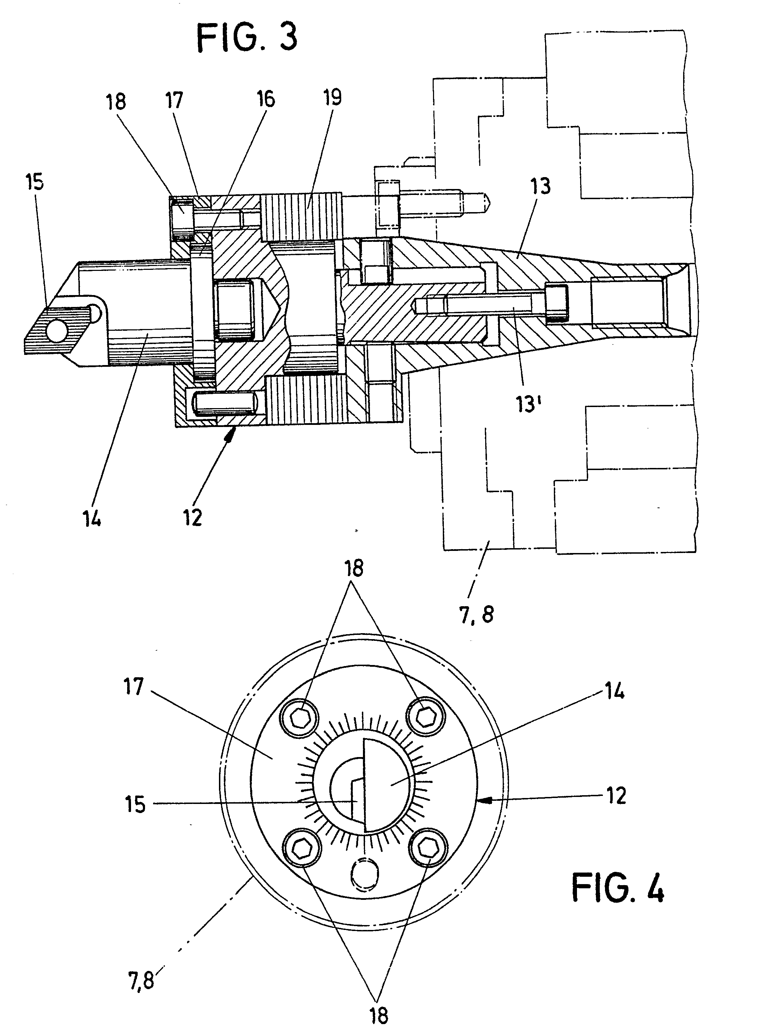

Jeder Träger 7, 8 nimmt ein auswechselbares Werkzeug 12 auf, vergl. insbesondere Fig. 3. Letzteres besitzt einen konischen Dorn 13, der in eine entsprechend geformte Öffnung des Trägers 7, 8 einsteckbar und dort mittels einer Spannschraube 13' fixierbar ist. Das Werkzeug 12 trägt einen winkelverstellbaren Haltezapfen 14, an dem der als Einzahn-Schlagmesser 15 ausgebildete Fräser sitzt. Der Haltezapfen 14 setzt sich in einen querschnittsgrösseren Bund 16 fort, der von einer Spannplatte 17 überfangen ist. Zur Sicherung der Spannplatte 17 dienen in gleicher Winkelverteilung angeordnete Schrauben 18. Nach Lösen derselben ist es möglich, den Haltezapfen 14 mit dem Einzahn-Schlagmesser 15 in eine entsprechende Winkelstellung zu bringen. Danach werden die Schrauben 18 angezogen, so dass der Haltezapfen 14 in der eingestellten Lage verharrt.

Eine weitere Verstellmöglichkeit ist am Werkzeug 12 vorgesehen. Zu diesem Zweck befindet sich dort ein verstellbarer Abschnitt 19, der es erlaubt, das Einzahn-Schlagmesser 15 in Längsrichtung der Fräser-Drehachse zu verstellen, und zwar zentral auf die Träger-Schwenkachse Y zu.

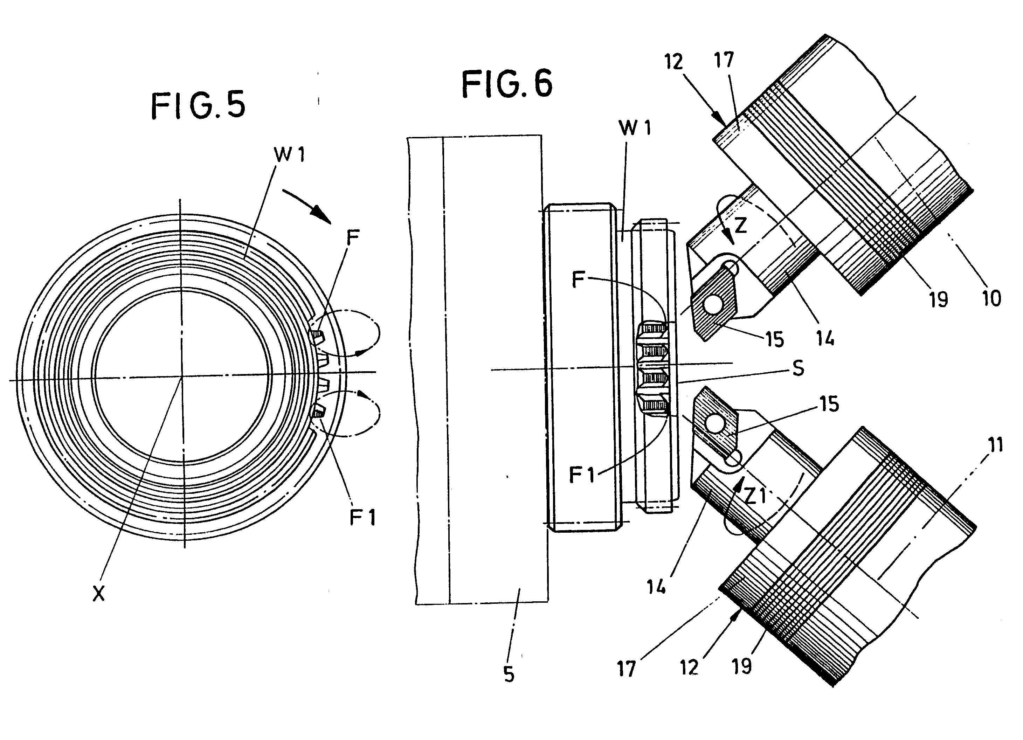

Sollen bei dem in Fig. 5 und 6 dargestellten aussenverzahnten Werkstück W1 an den Stirnflächen der Zähne dachförmige Flächen F und F1 erzeugt werden, so sind die Fräser-Drehachsen 10 und 11 durch entsprechendes Verschwenken der Träger 7 bzw. 8 um die Schwenkachse Y in die Stellung gemäss Fig. 6 zu bringen, und zwar so, dass die Fräser-Drehachsen 10, 11 in entsprechendem Winkelabstand zur durch die Werkstück-Drehachse X gelegten horizontalen Ebene liegen. Die Einzahn-Schlagmesser 15 der Träger 7, 8 greifen dann an jedem vierten Zahn an und erzeugen dort bei Umlauf des Werkstücks W1 in Pfeilrichtung dachförmig zueinander stehende Flächen F und F1 an den Zähnen bei gleichzeitiger Vorschubbewegung des Werkstück-Trägers 1 in Richtung des Lagerbocks 4. Zur besseren Veranschaulichung sind in Fig. 5 die entsprechenden Flächen F und F1 durch Schraffierung angedeutet. In Richtung der Werkstück-Drehachse X gesehen, durchlaufen die Einzahn-Schlagmesser eine elliptische Bahn. Die entsprechenden Drehrichtungen z und $Z_1$ bewirken, dass die Einzahn-Schlagmesser 15 in Richtung der Stirnseite S des Werkstücks W1 arbeiten, so dass dort eine eventuelle Gratbildung entsteht, die leicht zu entfernen ist.

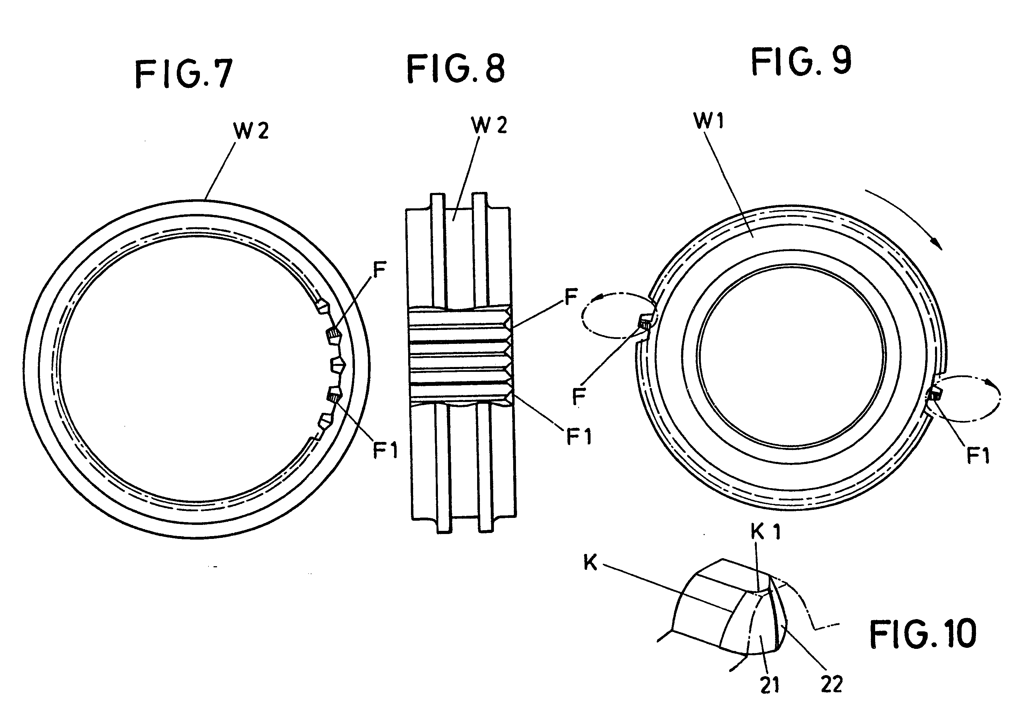

Fig. 9 veranschaulicht, dass die Träger 7, 8 der Träger-Drehachsen 10 bzw. 11 zusätzlich raumparallel zur Träger-Schwenkachse Y verlagert worden sind derart, dass die Einzahn-Schlagmesser 15 diametral am Werkstück W1 angrifen und dort an den Zähnen die dachförmig zueinander stehenden Flächen F und F1 erzeugen.

Dachförmige Flächen F und F1 lassen sich ebenfalls bei dem innenverzahnten Werkstück W2 erzielen. Die Fräser-Drehachsen 10, 11 bzw. deren Träger sind in eine solche Stellung zu bringen, dass jeder dritte Zahn an der entsprechenden Flanke seine dachförmige Fläche erhält. Zwecks einer besseren Zugänglichkeit kann dann eine Schwenkung der Drehachse X des Werkstück-Trägers 1 quer zur Träger-Schwenkachse Y vorgenommen werden.

Um die in Fig. 10 veranschaulichten sphärisch ausgebildeten, dachförmig zueinander stehenden Flächen 21 und 22 zu erhalten, ist es erforderlich, die Einzahn-Schlagmesser 15 an der dem Werkstück zugekehrten Flanke auszukehlen. Dann erzielt man eine Krümmung K. Die Krümmung K1, die quer zur vorerwähnten Krümmung K liegt, wird dagegen durch das Verschwenken der Drehachse X des Werkstück-Trägers 1 quer zur Träger-Schwenkachse Y erreicht.

Eine Verlagerung der Drehachse X bietet sich auch dann an, wenn bei unterschiedlichen Winkelstellungen der Drehachsen ohne Abänderung der Einzahn-Schlagmesser gearbeitet werden soll. Die Umlaufebenen der Einzahn-Schlagmesser lassen sich dadurch an die Werkstückachse anpassen.

## Patentanspruch

Werkzeugmaschine zum Bearbeiten der Stirnflächen von Zahnradzähnen (W1, W2) unter axialer Relativbewegung zwischen Werkstück und Fräser (15), wobei der in das kontinuierlich angetriebene Werkstück eintauchende Fräser in konstantem Drehzahlverhältnis zum Werkstückumlauf angetrieben ist und wobei zwei mit ihrer Drehachse (10, 11) um die gleiche Achse (Y) unabhängig voneinander schwenkbare Fräser-Drehachsenträger (7, 8) vorgesehen sind, dadurch gekennzeichnet, dass die zusätzlich in Längsrichtung der Fräser-Drehachsen (10, 11) zentral auf die Träger-Schwenkachse (Y) zustellbaren Fräser als Einzahn-Schlagmesser (15) ausgebildet und in Synchronlauf zueinander angetrieben sind derart, dass die einander zugekehrten Drehrichtungen in Richtung der Stirnseite (S) des Werkstückes und so liegen, dass das eine Schlagmesser die auf der einen Seite des Zahnes liegende Dachfläche (F) und gleichzeitig das andere Schlagmesser die entgegengesetzt stehende Dachfläche (F1) eines anderen Zahnes fräst.

## Claim

Machine tool for the machining of the end faces of gearwheel teeth (W1, W2), with an axial relative movement between the workpiece and the milling cutter (15), the milling cutter plunging into the continuously driven workpiece being driven at a constant speed ratio in relation to the workpiece rotation, and there being provided two milling-cutter axle carriers (7, 8) pivotable independently of one another with their axes of rotation (10, 11) about the same axis (Y), characterized in that the milling cutters, which additionally can be fed in the longitudinal direction of the milling-cutter axes of rotation (10, 11) centrally towards the carrier pivot axis (Y), are designed as single-tooth fly cutters (15) and are driven in synchronism with one another, in such a way that the directions of rotation opposing one another are towards the end face (S) of the workpiece and are located such that one fly cutter mills the roof surface (F) located on one side of the tooth and at the same time the other fly cutter mills the opposite roof surface (F1) of another tooth.

## Revendication

Machine-outil destinée à l'usinage des surfaces frontales des dentures d'engrenage (W1, W2) par déplacement axial relatif entre la pièce à usiner et la fraise (15), dans lequel la fraise en plongée dans la pièce à usiner entraînée en continu, est entraînée en rotation dans un rapport de nombre de tours constant par rapport à la rotation de la pièce à usiner et dans lequel on prévoit deux supports d'axes de rotation de fraise (7, 8) oscillants de façon indépendante l'un par rapport à l'autre avec leurs axes de rotation (10, 11) autour du même axe (Y), caractérisée en ce que les fraises réglables en plus dans la direction longitudinale des axes de rotation des fraises (10, 11) de façon centrale sur l'axe oscillant de support (Y), sont réalisées sous la forme d'une arête de coupe battante monodent (15) et sont entraînées en marche synchrone l'une par rapport à l'autre, de telle façon que les sens de rotation opposés l'un à l'autre soient en direction de la face frontale (S) de la pièce à usiner et sont placés de telle façon que l'une des arêtes de coupe fraise la surface en toit ou en V (F) se trouvant d'un côté de la dent et, qu'en même temps, l'autre arête de coupe fraise la surface en toit opposée (F1) d'une autre dent.

FIG.1

FIG. 2

0 107 826

**FIG. 3**

**FIG. 4**

FIG.6

FIG.5

# FIG.7

# FIG.8

# FIG.9

W2

W2

W1

F

F

F1

F1

F

F

F1

0 107 826

13

K

K1

21

22

# FIG.10